# EUROPÄISCHE PATENTSCHRIFT

(11) **EP 3 152 978 B1**
(45) Veröffentlichungstag und Bekanntmachung des Hinweises auf die Patenterteilung: **07.03.2018**
(21) Anmeldenummer: 15726961.4
(22) Anmeldetag: 03.06.2015
(51) Int. Cl.: H05B 6/64, H05B 6/76, F24C 7/02, F24C 7/08, H04N 5/225

(54) **HAUSHALTSGERÄT MIT SPEISENBEHANDLUNGSRAUM UND KAMERA**
HOUSEHOLD APPLIANCE WITH PROCESSING CAVITY AND CAMERA
APPAREIL MÉNAGER AVEC UN ESPACE DE TRAITEMENT ET CAMÉRA.

(30) Priorität: 05.06.2014 DE 102014210668
(43) Veröffentlichungstag der Anmeldung: 12.04.2017
(73) Patentinhaber: BSH Hausgeräte GmbH, 81739 München (DE)
(72) Erfinder: BEIFUSS, Wolfgang, 83339 Chieming (DE); HAS, Uwe, 84579 Unterneukirchen (DE)
(86) Internationale Anmeldenummer: PCT/EP2015/062384
(87) Internationale Veröffentlichungsnummer: WO 2015/185632

(56) Entgegenhaltungen:
- EP-A1- 2 515 044
- DE-A1-102010 029 197
- JP-A- 2006 145 142

## Beschreibung

Die Erfindung betrifft ein Haushaltsgerät, aufweisend einen Speisenbehandlungsraum, welcher eine mit einer Tür verschließbare Beschickungsöffnung aufweist, und mindestens eine Kamera zur Beobachtung des Speisenbehandlungsraums durch ein Sichtfenster. Die Erfindung ist insbesondere vorteilhaft anwendbar auf Mikrowellengeräte und Ofen/Mikrowellen-Kombinationsgeräte.
Ein Kunde eines typischen Haushalts-Speisenbehandlungsgeräts möchte in der Regel sehen, wie weit ein Speisenbehandlungsprozess (z.B. ein Brat-, Back- oder Kochprozess) in einem Speisenbehandlungsraum (z.B. in einem Garraum wie einem Backrohr) fortgeschritten ist. Dazu weist eine Tür, die eine Beschickungsöffnung des Speisenbehandlungsraums verschließen kann, häufig einen Durchblickbereich mit einer großflächigen Frontglasscheibe auf. Nachteiligerweise geht durch die Frontglasscheibe mehr Energie verloren als durch andere, besser wärmegedämmte Wände des Speisenbehandlungsraums.
Zur Minimierung des Energieverbrauches kann der Durchblickbereich weggelassen werden, so dass dieser Bereich effektiver dämmbar ist. Damit der in dem Speisenbehandlungsraum ablaufende Behandlungsprozess dennoch durch den Nutzer überwacht werden kann, wird in das Gerät eine Kamera eingebaut, welche den Speisenbehandlungsraum kontinuierlich beobachtet oder überwacht. Die gewonnenen Bilder werden auf einem Bildschirm des Geräts dargestellt. Der Kunde kann folglich wie gewohnt den Speisenbehandlungsraum beobachten und den Behandlungsprozess so kontrollieren und ggf. durch Veränderung der Backofeneinstellungen beeinflussen.

Ein Haushaltgerät nach dem Stand der Technik und dem Oberbegriff des Hauptanspruchs entsprechend ist aus JP 2006 145142 A bekannt. Bei Mikrowellengeräten ergibt sich das Problem, dass die Kamera und die damit verbundene Elektronik nicht der Mikrowellenstrahlung ausgesetzt werden dürfen, weil hierdurch deren Funktionen beeinträchtigt werden kann oder sie durch die Mikrowellenstrahlung sogar zerstört werden können.

Es ist die **Aufgabe** der vorliegenden Erfindung, die Nachteile des Standes der Technik zumindest teilweise zu überwinden und insbesondere eine einfach umsetzbare Möglichkeit zur kamerabasierten Überwachung eines Speisenbehandlungsraums eines Haushalts-Mikrowellengeräts bereitzustellen.

Diese Aufgabe wird gemäß den Merkmalen des unabhängigen Anspruch gelöst. Bevorzugte Ausführungsformen sind insbesondere den abhängigen Ansprüchen entnehmbar.
Die Aufgabe wird gelöst durch ein Haushaltsgerät, aufweisend einen Speisenbehandlungsraum, welcher eine mit einer Tür verschließbare Beschickungsöffnung aufweist, und mindestens eine Kamera zur Beobachtung des Speisenbehandlungsraums durch ein Sichtfenster, wobei das Haushaltsgerät ein Mikrowellengerät ist, dessen Speisenbehandlungsraum mit Mikrowellen beaufschlagbar ist, das Sichtfenster ein mehrere Löcher aufweisendes Abschirmblech (auch als "Lochblech" bezeichnet) aufweist, die Kamera so auf das Abschirmblech gerichtet ist, dass sich mindestens ein Loch des Abschirmblechs im Sichtfeld der Kamera befindet und die Kamera an mehreren Löchern des Abschirmblechs befestigt ist.
Es ergibt sich der Vorteil, dass ein Sichtbereich der Kamera auf dem Abschirmblech aufgrund ihrer Befestigung an mehreren Löchern des Abschirmblechs genau bekannt und zudem voreinstellbar ist. So kann sichergestellt werden, dass die Kamera (insbesondere deren Objektiv) so positioniert und ausgerichtet ist, dass sie einen vordefinierten und ausreichenden Einblick durch das Abschirmblech in den Speisenbehandlungsraum hinein ermöglicht. Durch die Befestigung an den Löchern wird also zur Ermöglichung eines Durchblicks durch das Abschirmblech eine genaue Positionierung der Kamera mit einfachen Mitteln ermöglicht, insbesondere ohne zusätzliche Justageelemente, Markierungen usw., die entweder nur aufwändig mit hoher Präzision bereitgestellt werden können oder zusätzliche Positionstoleranzen einbringen. Wenn also die optische Achse oder Sichtachse der Kamera genau definiert zu den Löchern im Abschirmblech orientiert ist, wird insbesondere eine automatische Bildauswertung bzw. Bildaufbereitung zur betrachterfreundlichen Darstellung auf einem Bildschirm wesentlich erleichtert. Auf die Frontglasscheibe zur Ermöglichung einer Durchsicht in den Speisenbehandlungsraum durch einen Nutzer kann verzichtet werden.
Das Haushaltsgerät ist also ein Haushalts-Mikrowellengerät zur Speisenbehandlung. Es mag ein eigenständiges Gerät sein, z.B. ein Mikrowellengerät. Es mag alternativ ein Gerät mit mindestens einer anderen Speisenbehandlungsfunktion ("Kombigerät") sein, z.B. ein Backofen und/oder ein Dampfbehandlungsgerät mit einer Mikrowellenfunktion.

Die Speisenbehandlung mag insbesondere ein Erwärmen oder Garen der zu behandelnden Speise umfassen. Der Speisenbehandlungsraum mag dann auch als Garraum bezeichnet werden.

Das Haushaltsgerät mag eine oder mehrere Kameras aufweisen. Diese können auf ein jeweiliges Sichtfenster gerichtet sein. Auch mögen mindestens zwei Kameras auf ein gemeinsames Sichtfenster gerichtet sein.

Unter einer Kamera mag eine fototechnische Apparatur verstanden werden, welche eine Folge statischer Bilder oder bewegte Bilder (Videos, Streams usw.) aufnimmt. Die Kamera mag insbesondere eine Digitalkamera sein.

Es ist eine Weiterbildung, dass die mindestens eine Kamera mit einer Steuereinrichtung des Haushaltsgeräts verbunden ist, beispielsweise zur automatischen Steuerung eines Speisenbehandlungsablaufs aufgrund der von der Kamera aufgenommenen Bilder. Dazu mögen die Bilder einer Bildverarbeitung unterzogen werden. Das Haushaltsgerät mag eine entsprechende Bildverarbeitungsfunktion aufweisen, z.B. in Form einer dedizierten Bildauswerteeinrichtung oder als Funktion der Steuereinrichtung. Die Bildverarbeitung kann zusätzlich oder alternativ dazu verwendet werden, die von der Kamera aufgenommenen Bilder zur verbesserten Darstellbarkeit für einen Nutzer aufzubereiten, z.B. zu schärfen oder farblich zu korrigieren.

Es ist noch eine Weiterbildung, dass die von der mindestens einen Kamera aufgenommenen Bilder auf einem Bildschirm des Haushaltsgeräts darstellbar sind. Der Bildschirm mag ein Flüssigkristallbildschirm oder ein OLED-Bildschirm sein. Der Bildschirm mag ein Farbbildschirm sein.

Es ist auch eine Weiterbildung, dass die von der Kamera aufgenommenen Bilder an ein externes Gerät übertragbar sind, z.B. auf einen Computer oder ein Smartphone, Tablet usw. Dies ermöglicht eine Fernüberwachung der Speisenbehandlung. Das Haushaltsgerät mag dazu mit einer drahtlosen und/oder drahtgebundenen Sendeeinrichtung zum Aussenden zumindest eines Teiles der von der mindestens einen Kamera aufgenommenen Bilder ausgerüstet sein, z.B. mit einer USB-Schnittstelle, einer Ethernet-Schnittstelle, einem Funksender usw.

Das Sichtfenster mag insbesondere eine Durchbrechung durch mindestens eine den Speisenbehandlungsraum begrenzenden Wand aufweisen, z.B. eine Durchbrechung durch eine Innenwand der Tür oder Muffel. Dieses Sichtfenster kann weitaus kleiner ausgebildet sein als ein herkömmlicher Durchblickbereich für einen Nutzer, so dass ein thermischer Verlust erheblich verringerbar ist.

Dass der Speisenbehandlungsraum mit Mikrowellen beaufschlagbar ist, mag bedeuten, dass Mikrowellen in ihn einstrahlbar sind. Dazu mag das Haushaltsgerät eine Mikrowellenerzeugungseinrichtung aufweisen, die Mikrowellen erzeugt, z.B. ein Magnetron. Die Mikrowellen mögen mittels eines Mikrowellenleiters in den Speisenbehandlungsraum geleitet werden, z.B. durch eine Decke und/oder eine Seitenwand.

Unter einem Abschirmblech mag insbesondere ein flacher Körper mit einer zumindest im Wesentlichen konstanten Stärke verstanden werden. Die Stärke oder Dicke beträgt bevorzugt weniger als 3 Millimeter (Feinblech), bevorzugt weniger als ein Millimeter. Das Abschirmblech mag aus Metall bestehen, z.B. aus Kupfer. Es mag im Falle von Metall aus einem Walzwerkfertigprodukt gefertigt worden sein. Es weist die Eigenschaft auf, dass es trotz der Löcher für die von dem Gerät erzeugten Mikrowellen undurchdringlich ist.

Die Löcher sind typischerweise sehr klein und stören die Durchsicht aus größerer Entfernung nur sehr wenig. Dies gilt besonders dann, wenn ein Durchmesser des Kameraobjektivs im Bereich von bis zu ca. 2 mm liegt. Wenn sich das Auge eines Betrachters oder ein Objektiv der Kamera sehr nahe (z. B. im Bereich von einigen Millimetern bis zu ca. einem Zentimeter) vor dem Abschirmblech befindet, werden die Löcher hingegen deutlich wahrgenommen. Die Löcher können durch Stanzen, Drücken, Schneiden, Atzen usw. in das Abschirmblech eingebracht worden sein.

Die Löcher sind in dem Abschirmblech insbesondere in einem regelmäßigen Muster angeordnet. Das regelmäßige Muster mag beispielsweise ein matrixartiges Muster sein, bei dem die Löcher in senkrecht zueinander stehenden Zeilen und Spalten angeordnet sind.

Das regelmäßige Muster mag auch ein Muster mit abwechselnd um eine halbe Position versetzten Zeilen und/oder Spalten sein. Ein solches Muster mag eine hexagonale Einheitszelle aufweisen. Die Löcher mögen aber z.B. auch in einem ringförmigen Muster mit beispielsweise einem oder mehreren um ein zentrales Loch angeordneten Ringen eingebracht sein.

Dass die Kamera an mehreren Löchern des Abschirmblechs befestigt ist, umfasst insbesondere, dass die Kamera direkt oder über einen Halter an den Löchern befestigt ist.

Es ist eine Ausgestaltung, dass eine optische Achse oder Sichtachse der Kamera bzw. des zugehörigen Objektivs auf einen Punkt des Abschirmblechs gerichtet ist, welcher einen Mittelpunkt derjenigen Gruppe von Löchern darstellt, die sich im Sichtfeld der Kamera befindet. So wird eine in Umfangsrichtung besonders gleichmäßige Bildqualität ermöglicht.

Es ist auch eine Ausgestaltung, dass zumindest die sich im Sichtfeld der Kamera befindliche Gruppe von Löchern eine mindestens zwei-zählige Drehsymmetrie aufweist, insbesondere um einen Schnittpunkt mit der Sichtachse oder optischen Achse. Dies entspricht insbesondere einer Drehsymmetrie um 180° um das Zentrum des Sichtfelds. Die drehsymmetrische Anordnung verbessert eine gleichmäßige Bildqualität. Je höher die Zahl n der n-zähligen Drehsymmetrie ist, desto gleichmäßiger kann die Bildqualität werden. Es ist eine Weiterbildung, dass zumindest die sich im Sichtfeld der Kamera befindliche Gruppe von Löchern eine drei-, vier-, fünf-, sechs- oder acht-zählige Drehsymmetrie aufweist.

Die Form der Löcher ist nicht beschränkt und mag beispielsweise freiflächnerisch, kreisförmig, oval oder m-eckig (mit m >= 3) sein. Ein viereckiges Loch mag beispielsweise die Form eines Parallelogramms, speziell einer Raute, speziell eines Rechtecks, speziell eines Quadrats annehmen. Die Raute mag gleichwinklig oder gestaucht sein. Die Löcher mögen insbesondere eine penta-, hexa- oder oktogonale Form aufweisen. Auch sind beispielsweise Überlagerungen mehrerer unterschiedlicher eckiger Grundformen möglich, z.B. eine Kombination eines Quadrats und eines Oktagons.

Es ist eine Ausgestaltung, dass die Kamera an mehreren Löchern des Abschirmblechs verrastet ist. Die Verrastung ermöglicht eine einfach umsetzbare, langzeitstabile und sichere Befestigung der Kamera an dem Abschirmblech. Alternativ oder zusätzlich mag die Kamera (direkt oder über einen Halter) kraftschlüssig (z.B. klemmend) und/oder stoffschlüssig (z.B. mittel eines Haftmittels) an den Löchern befestigt sein. Die Kamera (selbst oder ein Halter) mag dazu in die Löcher eingesetzt sein, insbesondere spielfrei oder mit einem nur geringen Spiel.

Es ist noch eine Ausgestaltung, dass die Kamera oder ihre Halterung Rastelemente (z.B. Rasthaken oder Rastnasen) zur Verrastung in den Löchern aufweist. Die Rastelemente ermöglichen eine Befestigung der Kamera an dem Abdeckbleck mittels eines einfachen Andrückens. Die Rastelemente weisen insbesondere ein Rastmaß auf, mit dem sie in die Löcher des Abschirmbleches passen. Die Rastelemente weisen insbesondere eine Anordnung auf, die insbesondere einem ganzzahligen Vielfachen der Lochabstände des Abschirmbleches entspricht. Die Kamera kann nur dann an dem Abschirmblech angebracht werden, wenn - z.B. bei einer Verrastung - alle Nasen einrasten. Falls dies nicht der Fall ist (z.B. aufgrund einer seitlichen Verschiebung und/oder einer Verdrehung gegenüber dem korrekten Sitz), gleitet die Kamera über das Blech.

Es ist eine weitere Ausgestaltung, dass mindestens eine dieser Rastelemente eine schmale Spitze aufweist. Diese ermöglicht aufgrund ihrer zumindest anfänglich geringen Breite ein vereinfachtes Ansetzen und eine vereinfache Einführung der zugehörigen Rastelemente in das zugehörige Loch. Zudem kann die Spitze als ein Abstandshalter oder Anschlag für einen auf der der Kamera abgewandten Seite des Abschirmblechs angeordneten Gegenstand dienen. Es ist eine Weiterbildung, dass alle Rastelemente eine solche Spitze aufweisen.

Es ist noch eine weitere Ausgestaltung, dass das Abschirmblech eben geformt ist und dass die Kamera schräg (nicht senkrecht) auf das Abschirmblech gerichtet ist. Dies ermöglicht eine besonders kompakte Bauform. So lässt sich für den Fall, dass die Kamera in der Tür eingebaut ist, eine vergleichsweise schmale Tür bereitstellen. Unter einer schrägen Ausrichtung der Kamera mag insbesondere eine Ausrichtung verstanden werden, bei welcher die Sichtachse oder optische Achse der Kamera senkrecht auf dem Abschirmblech oder parallel zu einer Flächennormalen am Schnittpunkt zu dem Abschirmblech ausgerichtet ist. Analog kann unter einer schrägen Ausrichtung der Kamera insbesondere eine Ausrichtung verstanden werden, bei welcher eine Sichtachse der Kamera nicht senkrecht auf dem Abschirmblech steht (sondern unter einem Neigungswinkel verschieden von 90°) oder geneigt zu einer Flächennormalen am Schnittpunkt zu dem Abschirmblech ausgerichtet ist.

Es ist ferner eine Ausgestaltung, dass das Abschirmblech ein ebenes Blech ist und dass die Kamera senkrecht auf das Abschirmblech gerichtet ist. So lässt sich im Gegensatz zu einer schrägen Ausrichtung der Kamera auf das Abschirmblech die volle Fläche der Löcher zur Einsicht in den Speisenbehandlungsraum nutzen, was eine besonders gute Bildqualität ermöglicht. Auch kann so das Abschirmblech besonders klein gehalten werden. Zudem stört eine Welligkeit des Abschirmblechs in dieser Ausgestaltung die Bildqualität nur wenig bis gar nicht.

Es ist auch eine Ausgestaltung, dass das Abschirmblech gegen eine Vertikale bzw. vertikale Raumrichtung geneigt ist. So kann eine kompakte Bauform mit einer erhöhten Bildqualität verbunden werden. Da das Abschirmblech und das zugehörige Sichtfenster vergleichsweise klein sind, wird nur wenig Bauraum für die geneigte Anordnung benötigt. Es ist eine Weiterbildung, dass das Abschirmblech gegen die Vertikale geneigt ist und die Kamera schräg auf das Abschirmblech gerichtet ist. Es ist noch eine Weiterbildung, dass das Abschirmblech gegen die Vertikale geneigt ist und die Kamera senkrecht auf das Abschirmblech gerichtet ist. Dann entspricht der Neigungswinkel der Kamera bzw. ihrer Sichtachse gegenüber einer Horizontalen insbesondere dem Neigungswinkel des Abschirmblechs gegen die Vertikale.

Es ist außerdem eine Ausgestaltung, dass das Abschirmblech in Richtung des Speisenbehandlungsraums gewölbt ist, z.B. ein kugelkalottenförmig gewölbt. So kann bei einer nah an dem Abschirmblech angeordneten Kamera ein zumindest ungefährer Gleichabstand des Objektivs zu den Löchern erreicht werden. In diesem Fall entspricht die Anordnung der Löcher auf der Oberfläche des Abschirmblechs beispielsweise einer ikosaederstumpfartigen Anordnung von Löchern, die beispielsweise der Struktur eines Fußballs, dessen Oberfläche aus Fünfecken und Sechsecken zusammengesetzt ist, ähnlich ist.

Es ist auch eine Ausgestaltung, dass die Ränder der Löcher des Abschirmblechs im Querschnitt abgerundet sind. So können Farbfehler im Bild verhindert werden, welche z.B. bei scharfen Kanten, wie sie beispielsweise durch unsaubere Stanzprozesse entstehen, zu optischen Beugungserscheinungen führen.

Es ist zudem eine Ausgestaltung, dass die Kamera und das Sichtfenster in der Tür angeordnet sind. Dies ist vorteilhaft, weil die Kamera dann das im Speisenbehandlungsraum ablaufende Geschehen aus einem Blickwinkel aufnimmt, welcher dem Blickwinkel bei Einsicht durch eine Frontglasscheibe zumindest annähernd entspricht und so für den Kunden intuitiv besonders einfach verständlich ist. Jedoch ist das Haushaltsgerät nicht darauf beschränkt. So mag es alternativ oder zusätzlich mindestens eine weitere Kamera aufweisen, die insbesondere nicht an der Tür angebracht ist, sondern beispielsweise an einer Decke und/oder an mindestens einer Seitenwand und/oder an einer Rückwand des den Speisenbehandlungsraum begrenzenden Gehäuses oder Wandung. Eine Anordnung an der Decke ermöglicht einen besonders guten Blick auf die einzige oder die oberste Gargutebene. Die Verwendung mehrerer Kameras ermöglicht eine besonders genaue Beobachtung oder Überwachung des Speisenbehandlungsraums. Bei Verwendung mehrerer Kameras können die Bilder (einschließlich Videos usw.) mindestens zweier Kameras, insbesondere aller Kameras, gemeinsam auf einem Bildschirm dargestellt werden, was eine besonders vollständige Überwachung erlaubt. Es ist noch eine Weiterbildung, dass die Bilder unterschiedlicher Kameras abwechselnd auf dem Bildschirm anzeigbar sind, wozu die zum Anzeigen gewünschte Kamera beispielsweise nutzerseitig auswählbar ist.

Es ist noch eine Ausgestaltung, dass die Kamera an mindestens zwei Linien von Löchern des Abschirmblechs befestigt ist, zwischen denen sich das Sichtfeld der Kamera befindet. Dadurch wird mit vergleichsweise wenigen Rastelementen ein besonders sicherer Sitz der Kamera ermöglicht, ohne deren Sichtfeld einzuengen.

Es ist noch eine weitere Ausgestaltung, dass das Sichtfenster eine transparente Scheibe aufweist, welche zwischen dem Abschirmblech und dem Speisenbehandlungsraum angeordnet ist. Die Scheibe dient als Schutzabdeckung beispielsweise gegenüber Spritzern und Wrasen und ggf. als Wärmedämmelement. Die Scheibe mag aus Kunststoff oder aus Glas bestehen.

Es ist zudem eine Ausgestaltung, dass die Scheibe zu dem Abschirmblech beabstandet angeordnet ist. So wird eine Hinterrastung durch Rastelemente der Kamera hinter den Löchern des Abschirmblechs auf einfache Weise ermöglicht. Falls die Rastelemente in Richtung der Scheibe vorstehende Spitzen aufweist, können diese als Abstandshalterund/oder Abstützung zu der Scheibe dienen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht ein Haushalts-Mikrowellengerät mit einer Kamera und einem Sichtfenster dafür;
- Fig.2: zeigt als Schnittdarstellung in Seitenansicht eine erste mögliche Ausgestaltung des Haushalts-Mikrowellengeräts im Bereich von Kamera und Sichtfenster;
- Fig.3: zeigt als Schnittdarstellung in Seitenansicht eine zweite mögliche Ausgestaltung des Haushalts-Mikrowellengeräts im Bereich von Kamera und Sichtfenster; und
- Fig.4: zeigt als Schnittdarstellung in Seitenansicht eine dritte mögliche Ausgestaltung des Haushalts-Mikrowellengeräts im Bereich von Kamera und Sichtfenster;
- Fig.5: zeigt in Frontalansicht eine Anordnung kreisrunder Löcher eines ebenen Abschirmblechs mit einer möglichen Lage eines Sichtfelds der Kamera;
- Fig.6: zeigt in Frontalansicht eine Anordnung kreisrunder Löcher eines ebenen Abschirmblechs mit einer anderen möglichen Lage des Sichtfelds der Kamera;
- Fig.7: zeigt in Frontalansicht eine Anordnung kreisrunder Löcher eines ebenen Abschirmblechs mit noch einer anderen möglichen Lage des Sichtfelds der Kamera;
- Fig.8: zeigt in Frontalansicht eine Anordnung rautenförmiger Löcher eines ebenen Abschirmblechs;
- Fig.9: zeigt in Frontalansicht eine Anordnung anderer rautenförmiger Löcher eines ebenen Abschirmblechs mit zwei möglichen Lagen von Sichtfeldern der Kamera;
- Fig.10: als Schnittdarstellung in Seitenansicht eine an dem Abschirmblech angebrachte Kamera;
- Fig.11: zeigt in Frontalansicht die Anordnung der rautenförmigen Löcher des Abschirmblechs aus Fig.9 mit daran angeordneten Rastelementen der Kamera; und
- Fig.12: zeigt in Frontalansicht eine Anordnung von Löchern eines gekrümmten Abschirmblechs.

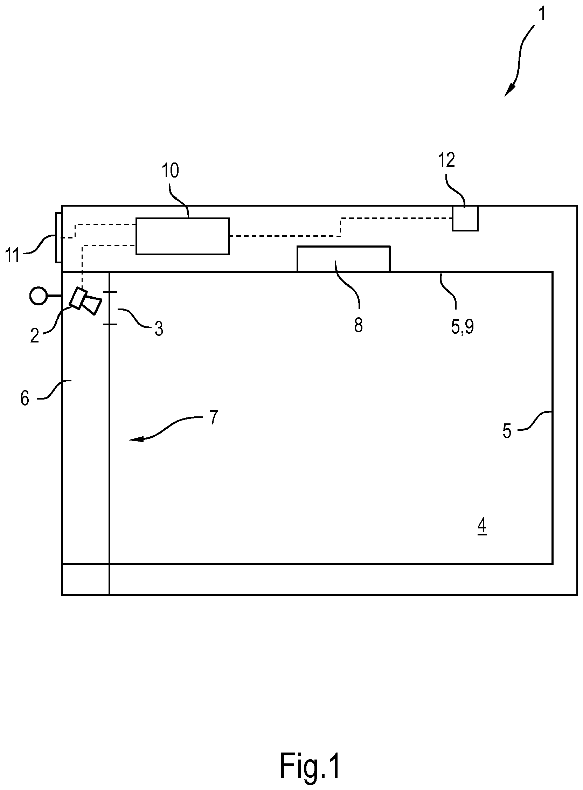

**Fig.1** zeigt als Schnittdarstellung in Seitenansicht ein Haushalts-Mikrowellengerät 1 mit einer Kamera 2 und einem Sichtfenster 3 dafür. Das Haushalts-Mikrowellengerät 1 ist beispielsweise ein eigenständiges Mikrowellengerät oder ein kombinierter Back-/Mikrowellen-Ofen. Das Haushalts-Mikrowellengerät 1 weist einen Speisenbehandlungsraum 4 auf, der von einer Wandung oder Muffel 5 umgeben ist, die frontseitig eine mittels einer Tür 6 verschließbare Beschickungsöffnung 7 aufweist. Die Kamera 2, die hier als eine Digitalkamera zur Aufnahme von Einzelbildern oder Bildfolgen (Videos, Streams usw.) ausgebildet ist, ist in der Tür 6 untergebracht. Die Kamera 2 dient zur Beobachtung des Speisenbehandlungsraums 4 durch das Sichtfenster 3.

Das Haushalts-Mikrowellengerät 1 weist ein Magnetron 8 auf, das Mikrowellen erzeugt, die durch eine Decke 9 der Muffel 5 in den Speisenbehandlungsraum 4 leitbar sind und ihn dadurch mit Mikrowellen beaufschlagen können.

Die Kamera 2 ist mit einer Bildverarbeitungseinrichtung 10 verbunden, welche die von der Kamera 2 aufgenommenen Bilder verarbeitet, z.B. für eine verbesserte Darstellbarkeit auf einem Bildschirm 11 aufbereitet. Ein Nutzer kann also auf dem Bildschirm 11 Bilder aus dem Speisenbehandlungsraum 4 betrachten. Der Bildschirm 11 mag z.B. ein Flüssigkristallbildschirm (z.B. LCD-Bildschirm, TFT-Bildschirm usw.) oder ein LED-Bildschirm (z.B. ein OLED-Bildschirm) sein. Er ist mit der Bildverarbeitungseinrichtung 10 verbunden. Die Bildverarbeitungseinrichtung 10 mag eine eigenständige Einheit sein oder mag z.B. eine zentrale Steuereinrichtung des Haushalts-Mikrowellengeräts 1 sein, die dann eine Bildverarbeitungsfunktion aufweist. Die Bildverarbeitungseinrichtung 10 ist hier mit einer Schnittstelle 12 zu mindestens einem externen Gerät (o. Abb.) verbunden, z.B. zu einem Smartphone, einem Tablet usw. Die Schnittstelle 12 mag eine unidirektional oder bidirektional arbeitende drahtlose und/oder drahtgebundene Schnittstelle sein, z.B. eine Ethernet-, USB-, Firewire- oder serielle Schnittstelle oder eine Funk- oder IR-Schnittstelle, z.B. eine Bluetooth- oder WLAN-Schnittstelle.

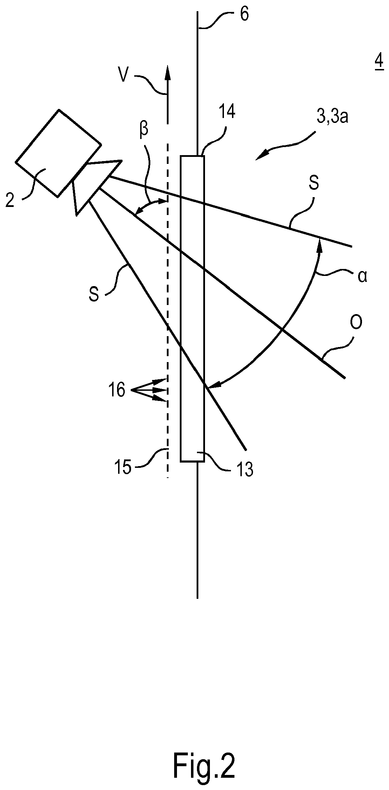

**Fig.2** zeigt eine erste mögliche Ausgestaltung des Haushalts-Mikrowellengeräts 1 im Bereich von Kamera 2 und Sichtfenster 3, 3a. Das Sichtfenster 3, 3a weist eine transparente Glasscheibe 13 in einem dem Speisenbehandlungsraum 4 zugewandten Ausschnitt 14 der Tür 6 auf. Die Glasscheibe 13 verhindert z.B. ein Eindringen von Wrasen oder Spritzern in die Tür 6. Gleichmäßig von der Glasscheibe 13 beabstandet befindet sich in der Tür 6 (und damit an der dem Speisenbehandlungsraum 4 abgewandten Seite der Glasscheibe 13) ein hier ebenes Abschirmblech 15 zum Abschirmen von durch die Glasscheibe 13 durchgetretenen Mikrowellen. Hinter dem Abschirmblech 15 befindet sich die Kamera 2, die also vor Mikrowellenstrahlung geschützt ist.

Das Abschirmblech 15 ist aus einem dünnen Metallblechteil hergestellt worden, in welches mehrere Löcher 16 eingebracht worden sind, z.B. durch Stanzen, Laserschweißen usw. Ränder der Löcher 16 sind im Querschnitt abgerundet, um z.B. optische Beugungserscheinungen zu unterdrücken.

Die Kamera 2 ist so auf das Abschirmblech gerichtet ist, dass sich mindestens ein Loch 16 in einem Sichtfeld S der Kamera 2 befindet. Die Kamera 2 ist an mehreren Löchern 16 des Abschirmblechs 15 durch Verrastung befestigt. Die Verrastung der Kamera 2 (direkt oder über einen Halter) an den Löchern 16 des Abschirmblechs 15 ermöglicht eine genau definierte Ausrichtung und Positionierung des Sichtfelds S mit einfachen Mitteln.

Das Sichtfeld S der Kamera 2 liegt hier beispielhaft symmetrisch, speziell kreisförmig, um deren optische Achse oder Sichtachse O. Ein Rand des Sichtfelds S mit der Sichtachse O schließt dabei einen halben Öffnungswinkel α/2 ein. Die Abbildung oder Projektion des Sichtfelds S auf dem Abschirmblech 15 kann als "Sichtfeld auf dem Abschirmblech" oder auch als Sichtfläche bezeichnet werden.

Eine Ausrichtung der Kamera 2 auf das Abschirmblech 15 wird durch den Winkel β zwischen der Sichtachse O und der Oberfläche des Abschirmblechs 15 bestimmt. Beträgt der Winkel β = 90°, wird auch von einer senkrechten Ausrichtung gesprochen, bei einem Winkel in einem Bereich von ]0°; 90°[ oder ]90°; 180°[ wird auch von einer schrägen Ausrichtung gesprochen. Liegt der Schnittpunkt von Sichtachse O und Abschirmblech 15 geodätisch oberhalb des Anfangspunkts der Sichtachse O an der Kamera 2, kann auch von einer Ausrichtung von schräg unten gesprochen werden, falls der Schnittpunkt von Sichtachse O und Abschirmblech 15 geodätisch unterhalb des Anfangspunkts der Sichtachse O an der Kamera 2 liegt, von einer Ausrichtung von schräg oben. In dieser Fig.2 ist eine Ausrichtung der Kamera 2 auf das vertikal bzw. entlang einer Vertikalen V ausgerichtete Abschirmblech 15 von schräg oben gezeigt. Eine solche Anordnung ist sehr kompakt und mag insbesondere eine notwendige Dicke der Tür 6 schmal halten.

Wenn unter einem sehr spitzen Winkel durch das Abschirmblech 15 hindurch geschaut wird (also die Sichtachse O einen sehr kleinen "kleinsten" Winkel mit dem Abschirmblech 15 einnimmt), wird das Abschirmblech 15 praktisch "undurchsichtig", weil der dann noch sichtbare kleinste Durchmesser der Löcher 16 im Abschirmblech 15 nicht wesentlich größer ist als die Dicke des Abschirmblechs 15. Dies mag in Fig.2 beispielsweise in einem gewissen Winkelbereich um die eingezeichnete untere Grenze des Sichtbereichs S der Fall sein. Dieser Effekt wird verstärkt, wenn dünne Abschirmbleche 15 nicht genau eben, sondern etwas "verzogen" und damit in sich wellig sind. In diesem Fall kann durch die Art der Wellen im Randbereich des Sichtfelds S ein "blinder Fleck" entstehen.

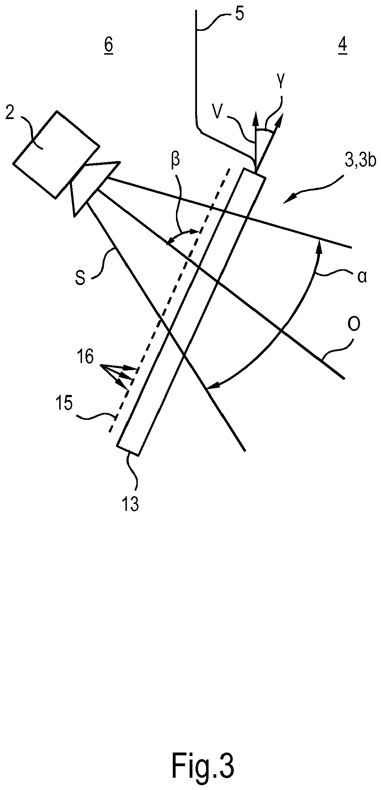

Um spitze Winkel β im Sichtfeld S zu vermeiden, kann das Abschirmblech 15 selbst um einen Winkel γ gegen die Vertikale V geneigt sein, wie in **Fig.3** gezeigt. Dabei mag auch die Glasscheibe 13 des Sichtfensters 3, 3b gegen die Vertikale V geneigt sein, beispielsweise so, dass es wieder parallel (aber bevorzugt beabstandet) zu dem Abschirmblech 15 liegt (also auch um einen Winkel γ). Es ist hier also das gesamte Sichtfenster 3, 3b um einen Winkel γ gegen die Vertikale V geneigt. Dadurch wird bei gleicher Ausrichtung der Kamera 2 der Winkel β im Vergleich zu Fig.2 vergrößert bzw. an 90° angenähert (und zwar um den Wert des Winkels γ), so dass die optische Stauchung der Löcher 16 geringer wird. Dies ergibt auch eine gleichmäßigere Bildqualität in Umfangsrichtung um die Sichtachse O herum.

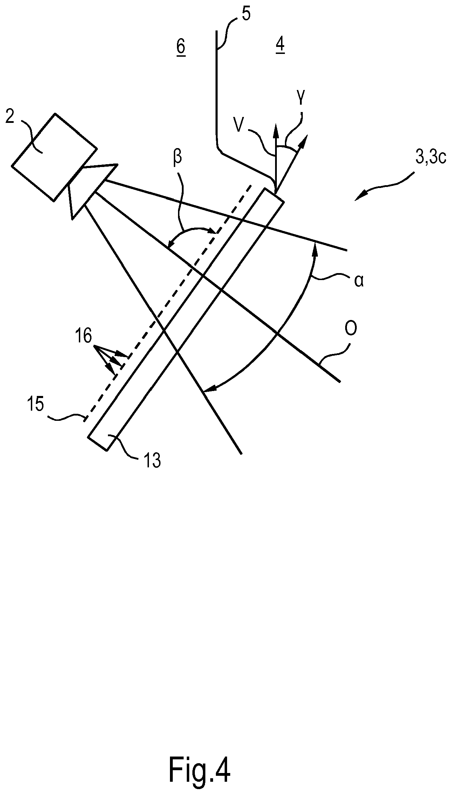

**Fig.4** zeigt als Schnittdarstellung in Seitenansicht eine dritte mögliche Ausgestaltung des Haushalts-Mikrowellengeräts 1 im Bereich von Kamera 2 und Sichtfenster 3, 3c. Das Sichtfenster 3, 3c ist ähnlich zu dem Sichtfenster 3b gegen die Vertikale V geneigt, jedoch nun so stark, dass die Sichtachse O senkrecht auf das Abschirmblech 15 gerichtet ist. Dies ergibt eine besonders gleichmäßige Bildqualität in Umfangsrichtung um die Sichtachse O herum.

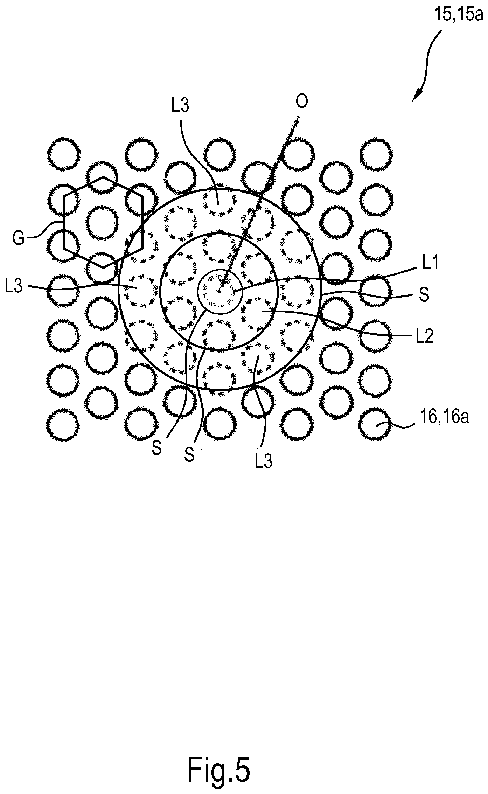

**Fig.5** zeigt in Frontalansicht eine mögliche Ausgestaltung eines Abschirmblechs 15, 15a. Die Löcher 16,16a sind kreisrund und in einem regelmäßigen Muster angeordnet. Das Muster weist eine hexagonale, mittig gefüllte Grundzelle G auf. Es kann auch als ein Muster mit abwechselnd um eine halbe Position seitlich versetzten Zeilen und/oder abwechselnd um eine halbe Position höhenversetzten Spalten angesehen.

Die Sichtachse O mag insbesondere mittig durch ein Loch L1 dieser Löcher 16, 16a verlaufen. Je nach Größe des Sichtfelds S an dem Abschirmblech 15 (bzw. nach Größe der Sichtfläche) mag nur dieses Loch L1 in dem Sichtfeld S liegen, mag auch der nächste Kreis von Löchern L2 zumindest teilweise (insbesondere überwiegend, d.h. mit einem Flächenanteil von mehr als 50%) in dem Sichtfeld S liegen, mag noch ein weiterer Kreis von Löchern L3 zumindest teilweise (insbesondere überwiegend) in dem Sichtfeld S liegen usw. Die Locher L1, L2, L3 sind gestrichelt dargestellt.

Die sich im Sichtfeld S der Kamera 2 befindliche Gruppe der Löcher 16a weist in Bezug auf eine Drehung um die Sichtachse O sechszählige Drehsymmetrie auf, d.h., dass die Gruppe der Löcher 16a sich bei einer vollen Umdrehung um die Sichtachse O (also um 360°) sechsmal in sich selbst abbildet, um zwar bei jeder Drehung um 60°.

Bei schräger Ausrichtung der Kamera 2 mag das Sichtfeld S an dem Abschirmblech 15 z.B. oval geformt sein.

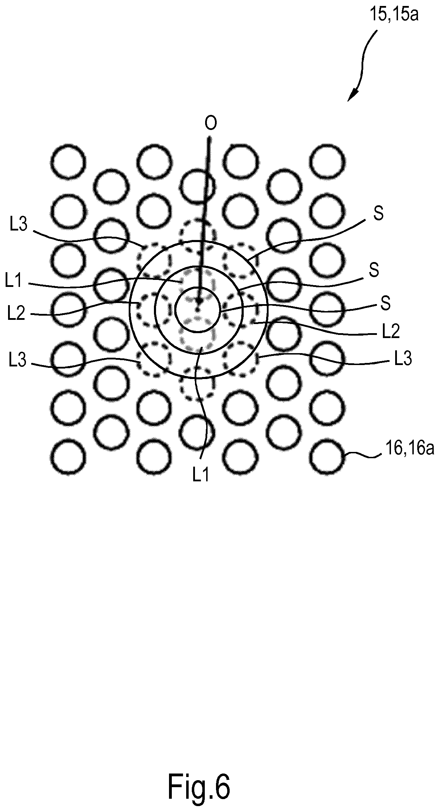

**Fig.6** zeigt in Frontalansicht die Anordnung der Löcher 16, 16a des ebenen Abschirmblechs 15 mit einer anderen möglichen Lage des Sichtfelds S der Kamera 2. Hier verläuft die Sichtachse O nun nicht durch ein Loch 16a, sondern liegt in der Mitte einer Verbindungslinie, welche die Zentren zweier benachbarter Löcher 16a verbindet.

Ein kleinstes praktisch nutzbares Sichtfeld S umfasst nur diese beiden Löcher 16a, L1 zumindest teilweise, ein nächstgrößeres Sichtfeld S umfasst zusätzlich die dazu nächsten seitlichen Löcher 16a, L2, ein noch größeres Sichtfeld S die restlichen nächstbenachbarten Löcher 16a, L3 usw.

Die sich hier im Sichtfeld S der Kamera 2 befindliche Gruppe der Löchern 16a weist in Bezug auf eine Drehung um die Sichtachse O eine zweizählige Drehsymmetrie auf, d.h., dass die Gruppe der Löcher 16a sich bei einer vollen Umdrehung um die Sichtachse O zweimal in sich selbst abbildet, um zwar bei jeder Drehung um 180°.

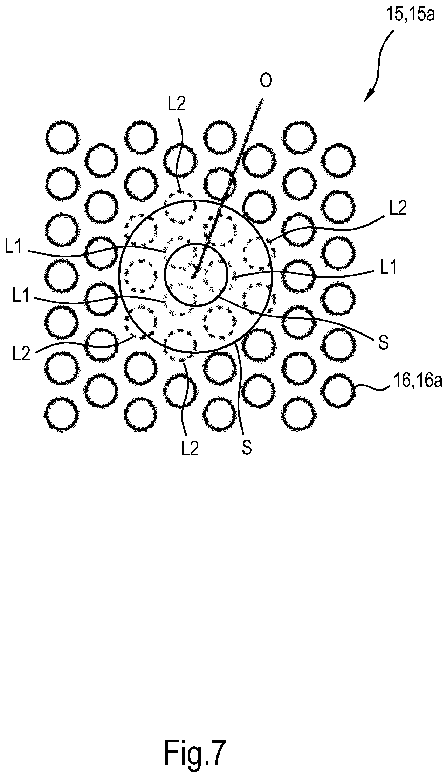

**Fig.7** zeigt in Frontalansicht die Anordnung der Löcher 16, 16a des ebenen Abschirmblechs 15 mit noch einer anderen möglichen Lage des Sichtfelds S der Kamera 2. Hier verläuft die Sichtachse O nun durch die Mitte dreier benachbarter Löcher 16a.

Ein kleinstes praktisch nutzbares Sichtfeld S umfasst nun diese drei Löcher 16a, L1 zumindest teilweise, ein nächstgrößeres Sichtfeld S umfasst zusätzlich die umgebenden Löcher 16a, L2 zumindest teilweise usw.

Die sich im Sichtfeld S der Kamera 2 befindliche Gruppe der Löchern 16a weist hier in Bezug auf eine Drehung um die Sichtachse O eine dreizählige Drehsymmetrie auf, also sich die Gruppe der Löcher 16a bei einer vollen Umdrehung um die Sichtachse O dreimal in sich selbst abbildet, um zwar bei jeder Drehung um 120°.

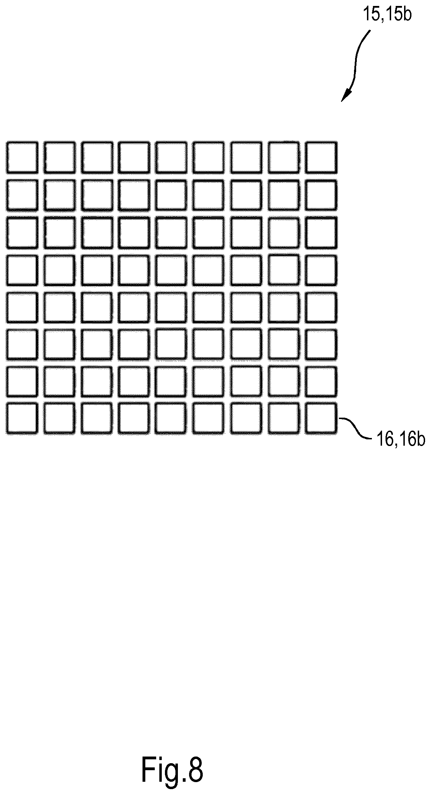

**Fig.8** zeigt in Frontalansicht eine Anordnung rautenförmiger Löcher 16, 16b eines ebenen Abschirmblechs 15, 15b. Die rautenförmigen Löcher sind hier als quadratische Löcher 16b ausgebildet, die aufrecht stehend in einem gleichmäßigen (m x n)-Matrixmuster mit beispielshaft m, n >= 8 angeordnet sind.

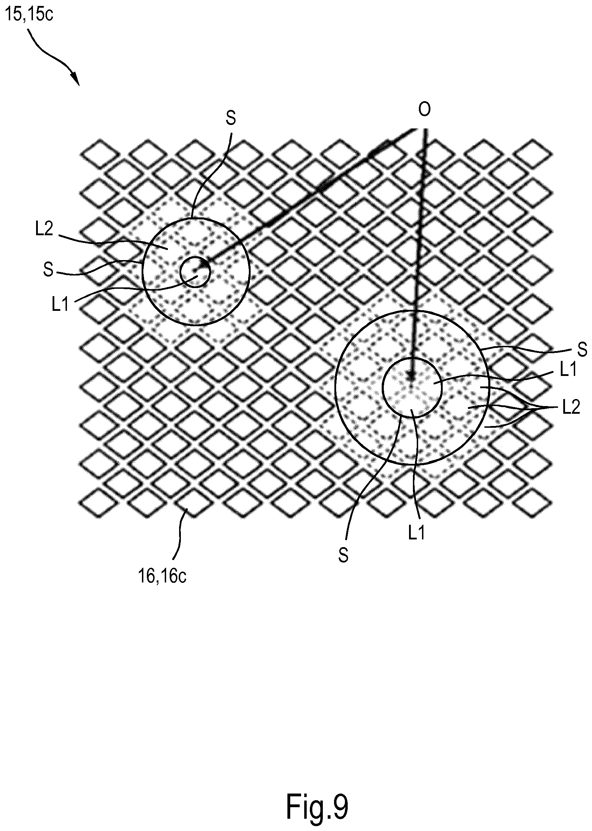

**Fig.9** zeigt in Frontalansicht eine Anordnung anderer rautenförmiger Löcher eines ebenen Abschirmblechs 15, 15c mit zwei möglichen Lagen von Sichtfeldern S der Kamera 2. Das Abschirmblech 15c weist als ein Muster mit abwechselnd um eine halbe Position seitlich versetzten Zeilen und/oder abwechselnd um eine halbe Position höhenversetzten Spalten aus rautenförmigen Löchern 16, 16c auf. Die Löcher 16c sind hier als auf ihrer Spitze stehende, schräge Rauten ausgebildet.

Bei einem links dargestellten Sichtfeld S verläuft die Sichtachse O mittig durch ein Loch 16c, L1, in einem rechts dargestellten Sichtfeld verläuft sie in der Mitte von vier sie umgebenden Löchern 16c, L1.

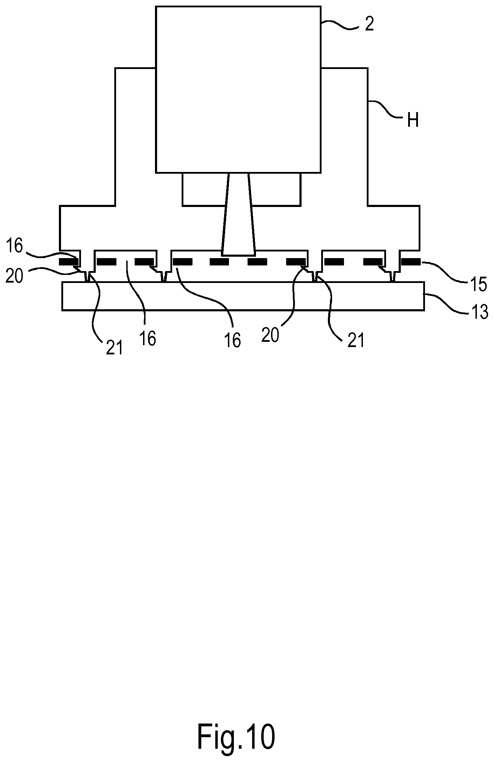

**Fig.10** zeigt als Schnittdarstellung in Seitenansicht eine an dem Abschirmblech 15 angebrachte Kamera 2. Die Kamera 2 ist direkt oder, wie hier dargestellt, über eine Halterung H mit dem Abschirmblech 15 verrastet verbunden. Die Halterung H weist dazu an ihrer dem Abschirmblech 15 zugewandten Seite mehrere Rastnasen oder Rasthaken 20 auf, die das Abschirmblech 15 hintergreifen. Die Kamera 2 lässt sich nur dann mit dem Abschirmblech 15 rastend verbinden, wenn alle Rasthaken 20 in entsprechende Löcher 16 einrasten können. Dies bewirkt eine sehr hohe Positionierungsgenauigkeit.

Die Rasthaken 20 weisen an ihrem dem Abschirmblech 15 zugewandten Ende eine schmale, in Richtung des Abschirmblechs 15 verlaufende Spitze 21 auf. Diese dient als Abstandshalter gegenüber den Abschirmblech 15 und stellt beispielsweise sicher, dass der Abstand des Abschirmblechs 15 zu der Glasscheibe 13 eingehalten wird. Auch helfen die Spitzen 21 einer vereinfachten Einführung in die Löcher 16.

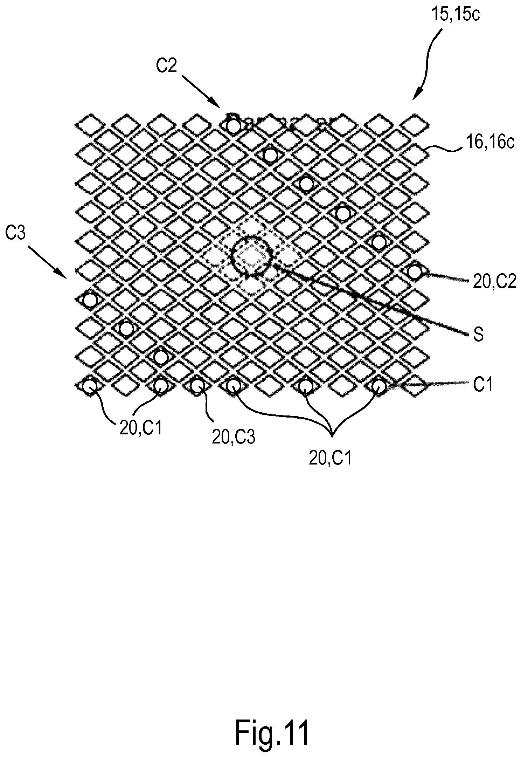

**Fig.11** zeigt in Frontalansicht die Anordnung der rautenförmigen Löcher 16c des Abschirmblechs 15c aus Fig.9 mit daran angeordneten Rasthaken 20 der Kamera 2. Die Kamera 2 ist an zwei Linien C1 und C2 oder C3 und C2 von Löchern 16c des Abschirmblechs 15c befestigt, zwischen denen sich das Sichtfeld S der Kamera 2 befindet.

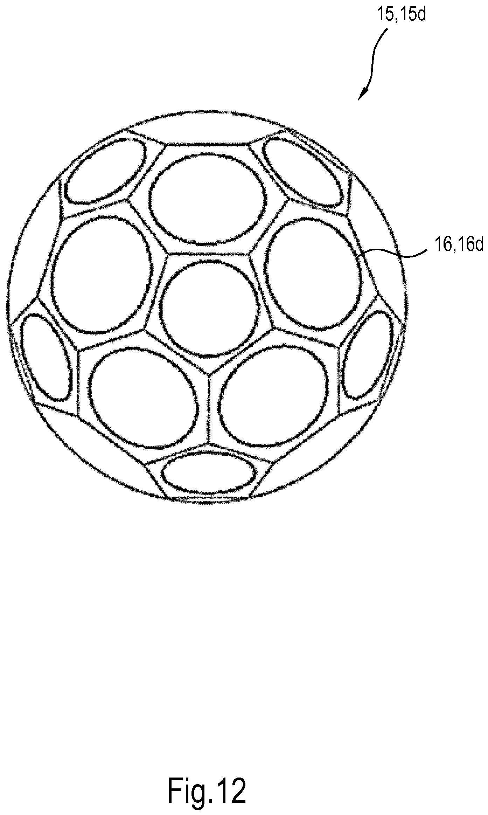

**Fig.12** zeigt in Frontalansicht eine Anordnung von kreisrunden Löchern 16, 16d eines kugelkalottenartig oder sphärisch in Richtung des Speisenbehandlungsraums 4 gewölbten oder gekrümmten Abschirmblechs 15d.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushaltsgerät
- 2: Kamera
- 3: Sichtfenster
- 3a-c: Sichtfenster
- 4: Speisenbehandlungsraum
- 5: Muffel
- 6: Tür
- 7: Beschickungsöffnung
- 8: Magnetron
- 9: Decke der Muffel
- 10: Bildverarbeitungseinrichtung
- 11: Bildschirm
- 12: Schnittstelle
- 13: Glasscheibe
- 14: Ausschnitt
- 15: Abschirmblech
- 15a-d: Verschiedene Ausführungsbeispiele des Abschirmblechs
- 16: Löcher in dem Abschirmblech
- 16a-d: verschiedene Ausführungsbeispiele der Löcher
- 20: Rasthaken
- 21: Schmale Spitze des Rasthakens
- C1-C3: Linien von Löchern des Abschirmblechs
- G: Grundzelle
- H: Halterung
- L1: zu einem kleinen Sichtfeld S zugehörige Löcher
- L2: zu einem größeren Sichtfeld S zugehörige Löcher
- L3: zu einem noch größeren Sichtfeld S zugehörige Löcher
- O: Sichtachse der Kamera
- S: Sichtfeld der Kamera
- V: Vertikale Raumrichtung
- α: Voller Öffnungswinkel des Sichtfelds
- β: Winkel zwischen Sichtachse und Oberfläche des Abschirmblechs
- γ: Winkel des Abschirmblechs zur Vertikalen

## Patentansprüche

1. Haushaltsgerät (1), aufweisend
- einen Speisenbehandlungsraum (5), welcher eine mit einer Tür (6) verschließbare Beschickungsöffnung (7) aufweist, und
- mindestens eine Kamera (2) zur Beobachtung des Speisenbehandlungsraums (5) durch ein Sichtfenster (3), wobei
- das Haushaltsgerät (1) ein Mikrowellengerät ist, dessen Speisenbehandlungsraum (5) mit Mikrowellen beaufschlagbar ist,
- das Sichtfenster (3) ein mehrere Löcher (16) aufweisendes Abschirmblech (15) aufweist,
- die Kamera (2) so auf das Abschirmblech (15) gerichtet ist, dass sich mindestens ein Loch (16) in einem Sichtfeld (S) der Kamera (2) befindet
**dadurch gekennzeichnet, dass**
- die Kamera (2) an mehreren Löchern (16) des Abschirmblechs (15) befestigt ist.

2. Haushaltsgerät (1) nach Anspruch 1, **dadurch gekennzeichnet, dass** die Kamera (2) an mehreren Löchern (16) des Abschirmblechs (15) verrastet ist.

3. Haushaltsgerät (1) nach Anspruch 2, **dadurch gekennzeichnet, dass** die Kamera (2) Rastelemente (20) zur Verrastung in den Löchern (16) aufweist, von denen mindestens ein Rastelement (20) eine schmale Spitze (21) aufweist.

4. Haushaltsgerät (1) nach einem der vorhergehenden Ansprüche, **dadurch gekennzeichnet, dass** das Abschirmblech (15) ein ebenes Blech ist und dass die Kamera (2) schräg auf das Abschirmblech (15) gerichtet ist.

5. Haushaltsgerät (1) nach einem der Ansprüche 1 bis 3, **dadurch gekennzeichnet, dass** das Abschirmblech (15) ein ebenes Blech ist und dass die Kamera (2) senkrecht auf das Abschirmblech (15) gerichtet ist.

6. Haushaltsgerät (1) nach Anspruch 5, **dadurch gekennzeichnet, dass** das Abschirmblech (15) gegen eine Vertikale geneigt ist.

7. Haushaltsgerät (1) nach einem der Ansprüche 1 bis 3, **dadurch gekennzeichnet, dass** das Abschirmblech (15) ein in Richtung des Speisenbehandlungsraums (5) gewölbtes Blech ist.

8. Haushaltsgerät (1) nach einem der vorhergehenden Ansprüche, **dadurch gekennzeichnet, dass** die Ränder der Löcher (16) des Abschirmblechs (15) im Querschnitt abgerundet sind.

9. Haushaltsgerät (1) nach einem der vorhergehenden Ansprüche, **dadurch gekennzeichnet, dass** die Kamera (2) und das Sichtfenster (3) in der Tür (6) angeordnet sind.

10. Haushaltsgerät (1) nach einem der vorhergehenden Ansprüche, **dadurch gekennzeichnet, dass** eine Sichtachse (O) der Kamera (2) auf einen Punkt des Abschirmblechs (15) gerichtet ist, welcher einen Mittelpunkt derjenigen Gruppe von Löchern (16) darstellt, die sich im Sichtfeld der Kamera (2) befindet.

11. Haushaltsgerät (1) nach einem der vorhergehenden Ansprüche, **dadurch gekennzeichnet, dass** die sich im Sichtfeld (S) der Kamera (2) befindliche Gruppe von Löchern (16) eine mindestens zwei-zählige Drehsymmetrie aufweist.

12. Haushaltsgerät (1) nach einem der vorhergehenden Ansprüche, **dadurch gekennzeichnet, dass** die Kamera (2) an mindestens zwei Linien (C1, C2; C3, C2) von Löchern (16) des Abschirmblechs (15) befestigt ist, zwischen denen sich das Sichtfeld (S) der Kamera (2) befindet.

13. Haushaltsgerät (1) nach einem der vorhergehenden Ansprüche, **dadurch gekennzeichnet, dass** das Sichtfenster (3) eine transparente Scheibe (13) aufweist, welche zwischen dem Abschirmblech (15) und dem Speisenbehandlungsraum (5) angeordnet ist und zu dem Abschirmblech (15) beabstandet angeordnet ist.

## Claims

1. Household appliance (1) having
- a food treatment chamber (5) which has a loading opening (7) that can be closed by a door (6), and
- at least one camera (2) for observing the food treatment chamber (5) through a viewing window (3),
wherein
- the household appliance (1) is a microwave appliance, it being possible for microwaves to be applied to the food treatment chamber (5) thereof,
- the viewing window (3) has a shielding plate (15) with a number of holes (16),
- the camera (2) is directed onto the shielding plate (15) in such a manner that at least one hole (16) is in a field of view (S) of the camera (2)
**characterised in that**
- the camera (2) is fastened to a number of holes (16) in the shielding plate (15).

2. Household appliance (1) according to claim 1, **characterised in that** the camera (2) is latched to a number of holes (16) in the shielding plate (15).

3. Household appliance (1) according to claim 2, **characterised in that** the camera (2) has latching elements (20) for latching in the holes (16), at least one of said latching elements (20) having a narrow tip (21).

4. Household appliance (1) according to one of the preceding claims, **characterised in that** the shielding plate (15) is a flat plate and the camera (2) is directed obliquely onto the shielding plate (15).

5. Household appliance (1) according to one of claims 1 to 3, **characterised in that** the shielding plate (15) is a flat plate and the camera (2) is directed onto the shielding plate (15) in a perpendicular manner.

6. Household appliance (1) according to claim 5, **characterised in that** the shielding plate (15) is at an angle to a vertical.

7. Household appliance (1) according to one of claims 1 to 3, **characterised in that** the shielding plate (15) is a plate that is arched in the direction of the food treatment chamber (5).

8. Household appliance (1) according to one of the preceding claims, **characterised in that** the edges of the holes (16) in the shielding plate (15) are rounded in cross section.

9. Household appliance (1) according to one of the preceding claims, **characterised in that** the camera (2) and the viewing window (3) are arranged in the door (6).

10. Household appliance (1) according to one of the preceding claims, **characterised in that** a visual axis (O) of the camera (2) is directed onto a point of the shielding plate (15) which is a centre point of the group of holes (16) in the field of view of the camera (2).

11. Household appliance (1) according to one of the preceding claims, **characterised in that** the group of holes (16) in the field of view (S) of the camera (2) has an at least two-fold rotational symmetry.

12. Household appliance (1) according to one of the preceding claims, **characterised in that** the camera (2) is fastened to at least two lines (C1, C2; C3, C2) of holes in the shielding plate (15), with the field of view (S) of the camera (2) being located between these.

13. Household appliance (1) according to one of the preceding claims, **characterised in that** the viewing window (3) has a transparent pane (13), which is arranged between the shielding plate (15) and the food treatment chamber (5) and is arranged at a distance from the shielding plate (15).

## Revendications

1. Appareil ménager (1) présentant :
- un espace de traitement d'aliments (5), lequel présente une ouverture de chargement (7) fermable par une porte (6), et
- au moins une caméra (2) destinée à observer l'espace de traitement d'aliments (5) à travers une fenêtre de visualisation (3),
- l'appareil ménager (1) étant un appareil à microondes dont l'espace de traitement d'aliments peut être chargé avec des microondes,
- la fenêtre de visualisation (3) présentant une tôle de blindage (15) présentant plusieurs trous (16),
- la caméra (2) étant dirigée sur la tôle de blindage (15) de manière à ce qu'au moins un trou (16) se trouve dans le champ de vision (S) de la caméra (2),
**caractérisé en ce que**
- la caméra (2) est fixée sur plusieurs trous (16) de la tôle de blindage (15).

2. Appareil ménager (1) selon la revendication 1, **caractérisé en ce que** la caméra (2) est encliquetée sur plusieurs trous (16) de la tôle de blindage (15).

3. Appareil ménager (1) selon la revendication 2, **caractérisé en ce que** la caméra (2) présente des éléments d'encliquetage (20) pour l'encliquetage dans les trous (16), dont au moins un élément d'encliquetage (20) présente une pointe (21) étroite.

4. Appareil ménager (1) selon l'une quelconque des revendications précédentes, **caractérisé en ce que** la tôle de blindage (15) est une tôle plane et **en ce que** la caméra (2) est dirigée obliquement sur la tôle de blindage (15).

5. Appareil ménager (1) selon l'une quelconque des revendications 1 à 3, **caractérisé en ce que** la tôle de blindage (15) est une tôle plane et **en ce que** la caméra (2) est dirigée de manière verticale sur la tôle de blindage (15).

6. Appareil ménager (1) selon la revendication 5, **caractérisé en ce que** la tôle de blindage (15) est inclinée par rapport à une verticale.

7. Appareil ménager (1) selon l'une quelconque des revendications 1 à 3, **caractérisé en ce que** la tôle de blindage (15) est une tôle bombée en direction de l'espace de traitement d'aliments (5).

8. Appareil ménager (1) selon l'une quelconque des revendications précédentes, **caractérisé en ce que** les bords des trous (16) de la tôle de blindage (15) sont arrondis en section transversale.

9. Appareil ménager (1) selon l'une quelconque des revendications précédentes, **caractérisé en ce que** la caméra (2) et la fenêtre de visualisation (3) sont disposées dans la porte (6).

10. Appareil ménager (1) selon l'une quelconque des revendications précédentes, **caractérisé en ce qu'**un axe de vision (O) de la caméra (2) est dirigé sur un point de la tôle de blindage (15), lequel représente un centre du groupe de trous (16), lequel se trouve dans le champ de vision de la caméra (2).

11. Appareil ménager (1) selon l'une quelconque des revendications précédentes, **caractérisé en ce que** le groupe de trous (16) se trouvant dans le champ de vision de la caméra (2) présente au moins une symétrie de rotation binaire.

12. Appareil ménager (1) selon l'une quelconque des revendications précédentes, **caractérisé en ce que** la caméra (2) est fixée sur au moins deux lignes (C1, C2 ; C3, C2) de trous (16) de la tôle de blindage (15), entre lesquelles se trouve le champ de vision (S) de la caméra (2).

13. Appareil ménager (1) selon l'une quelconque des revendications précédentes, **caractérisé en ce que** la fenêtre de vision (3) présente une vitre transparente (13), laquelle est disposée entre la tôle de blindage (15) et l'espace de traitement d'aliments (5) et est disposée à distance de la tôle de blindage (15).
